(19) Europäisches Patentamt
European Patent Office
Office européen des brevets

(11) **EP 4 187 775 A1**

(12) **EUROPÄISCHE PATENTANMELDUNG**

(43) Veröffentlichungstag:
**31.05.2023 Patentblatt 2023/22**

(21) Anmeldenummer: 22201590.1

(22) Anmeldetag: **14.10.2022**

(51) Internationale Patentklassifikation (IPC):
**H02P 6/182** (2016.01)

(52) Gemeinsame Patentklassifikation (CPC):
**H02P 6/182**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **26.11.2021 DE 102021131032**

(71) Anmelder: **Miele & Cie. KG**
**33332 Gütersloh (DE)**

(72) Erfinder:
• **Rodehüser, Tobias**
**59329 Wadersloh (DE)**
• **Neufeld, Alexander**
**33619 Bielefeld (DE)**

(54) **VERFAHREN ZUM ANSTEUERN EINES MINDESTENS ZWEIPHASIGEN BÜRSTENLOSEN MOTORS**

(57) Die Erfindung betrifft ein Verfahren zum Ansteuern eines mindestens zweiphasigen bürstenlosen Motors (M) ohne Rotorlagesensor mit wenigstens den Schritten:
• sinusförmiges Bestromen (100) wenigstens einer Phase (U, V, W), wobei die Phasenspannung ($U_{Phase}$) des Bestromens (100) vorzugsweise mittels PWM-Steuerung eingestellt wird,
• Ermitteln (200a) der Phasenspannung ($U_{Phase}$) der nicht rein sinusförmig bestromten Phase (U, V, W),
• Ermitteln (200b) der Sternpunktspannung,
• Bestimmen (300) einer Spannungsdifferenz (EMK) der nicht rein sinusförmig bestromten Phase (U, V, W) aus der Differenz zwischen der ermittelten Phasenspannung ($U_{Phase}$) und der ermittelten Sternpunktspannung, und
• Bestimmen (400) einer Rotorlage basierend auf der bestimmten Spannungsdifferenz der nicht rein sinusförmig bestromten Phase (U, V, W).

FIG. 5

EP 4 187 775 A1

**Beschreibung**

Die Erfindung betrifft ein Verfahren zum Ansteuern eines mindestens zweiphasigen bürstenlosen Motors gemäß dem Patentanspruch 1, eine Ansteuerungsvorrichtung zum Ansteuern eines mindestens zweiphasigen bürstenlosen Motors gemäß dem Patentanspruch 11, einen mindestens zweiphasigen bürstenlosen Motor mit einer derartigen Ansteuerungsvorrichtung gemäß dem Patentanspruch 14 sowie ein Haushaltsgerät mit mindestens einem derartigen mindestens zweiphasigen bürstenlosen Motor gemäß dem Patentanspruch 15.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft.

Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor verzichtet werden. Dies kann die zuvor genannten Nachteile vermeiden sowie insgesamt das Gewicht, den Bauraum und die Kosten derartiger permanenterregter Synchronmotoren geringhalten. Derartige permanenterregte Synchronmotoren mit einer schaltenden Elektronik werden daher üblicherweise auch als bürstenlose Motoren (Englisch: Brushless direct current motor - kurz: BLDC-Motor) bezeichnet. Die Spulenstränge des Stators können über einen Vierquadrantensteller angesteuert werden. Die Elektronik zur Ansteuerung der Brücke ist ein geregelter Frequenzumrichter. Üblicherweise werden bürstenlose Motoren dreiphasig ausgebildet, da sie dann den Vorteil einer definierten Läuferstellung bei hoher Dynamik, hohem Drehmoment und hoher Effizienz aufweisen.

Charakteristisch für bürstenlose Motoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen.

Die Steuerung der Kommutierung erfolgt in Abhängigkeit der aktuellen Rotorposition, welche über wenigstens einen Positionssensor zum Beispiel als Hall-Sensor erfasst werden kann, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann.

Mit anderen Worten ist ein bürstenloser Motor (BLDC-Motor) konstruktiv gesehen eine Drehfeldmaschine, welche keinen mechanischen Kommutator benötigt. Der Rotor beinhaltet einen oder mehrere Permanentmagnete. Durch die Wechselwirkung zwischen Statorfeld und Rotorfeld entsteht ein elektrisches Moment, das zu einer Rotation führen kann.

Zum Betrieb eines bürstenlosen Motors ist üblicherweise ein Motorumrichter notwendig. Der Motorumrichter beinhaltet üblicherweise im Wesentlichen ein Controller sowie Leistungshalbleiter zur Ansteuerung der Motorphasen. Außerdem ist üblicherweise ein Zwischenkreis vorhanden, aus dem der bürstenlose Motor gespeist wird.

Anders als die unter dem Begriff permanenterregte Synchron-Maschinen (PMSM) oder PMAC bekannten Motoren werden bei einem bürstenlosen Motor z.B. jeweils nur zwei Phasen von drei gleichzeitig bestromt und die dritte Phase ist stromlos. Die Auswahl der zu bestromenden Phasen ist von der Rotorlage abhängig. Der Übergang von einem Sektor bzw. Block zum nächsten wird auch "elektronische Kommutierung" genannt; deswegen auch die Bezeichnung "brushless" oder "elektronisch kommutiert". Die für die Kommutierung eines bürstenlosen Motors notwendige Information über die Rotorlage wird üblicherweise über einen Lagesensor wie beispielsweise Hall-Sensoren, Resolver oder Inkrementalgeber gemessen.

Aus dem Stand der Technik sind verschiedene Lösungen bekannt, die diese Kommutierung ohne einen Lagesensor erlauben. Der am meisten verbreitete Ansatz der sensorlosen Ansteuerung basiert darauf, die Rotorlage und die Kommutierungszeitpunkte durch Messung der induzierten Spannung in der inaktiven Phase zu ermitteln. Die Spannungspotenziale der Motorphase und des Motorsternpunkts werden über Spannungsteiler miteinander verglichen und der Nullübergang wird als Referenzzeitpunkt für die Kommutierung genommen.

Bei bürstenlosen Motoren, bei denen der Sternpunkt nicht physikalisch herausgeführt ist (etwa bei einer Dreieck-Schaltung), kann ein Sternpunkt künstlich durch drei in Stern geschaltete Widerstände nachgebildet werden. Das Spannungspotential des künstlichen Sternpunkts wird dann anschließend mit dem Spannungspotential der inaktiven Phase, zum Beispiel über einen Komparator, verglichen. Der Nulldurchgang dieser Differenz wird als Referenzzeitpunkt für die Kommutierung genommen.

Bei einem optimal kommutierten bürstenlosen Motor sollen der Phasenstrom und die EMK (Elektro-Motorische Kraft, also die induzierte Phasenspannung) in Phase sein, dann ist der Arbeitspunkt mit der höchsten dem höchsten Wirkungsgrad des Motors erreicht. Dieses Kriterium bedeutet, dass der Nulldurchgang der EMK einer Phase etwa in der Mitte des stromlosen Intervalls erfolgen soll (unter der Annahme einer kleinen Verzögerung zwischen Spannung und Strom in der Phase). Bei der herkömmlichen Ansteuerung ist dies nicht ohne weiteres gegeben.

Die DE 10 2017 117 109 A1 beschreibt ein Verfahren zur Ansteuerung eines mindestens zweiphasigen bürstenlosen Motors, bevorzugt ohne Rotorlagesensor, umfassend:

- Bestromen von zwei Phasen, wobei die Spannung des Bestromens mittels PWM-Steuerung eingestellt wird;

- Ermitteln der induzierten Spannung einer nicht bestromten Phase;

- Anpassen der PWM-Frequenz, falls die induzierte Spannung ungleich Null ist, wobei

  ◦ die PWM-Frequenz erhöht wird, falls die induzierte Spannung bei positivem Nulldurchgang < 0; oder die induzierte Spannung bei negativem Nulldurchgang > 0; und

  ◦ die PWM-Frequenz verringert wird, falls die induzierte Spannung bei positivem Nulldurchgang > 0; oder die induzierte Spannung bei negativem Nulldurchgang < 0.

Somit wird die induzierte Spannung verwendet, um auf den Zustand der Kommutierung zu schließen. Abhängig davon kann über die Änderung der PWM-Frequenz entsprechend geregelt werden, um den Nulldurchgang der induzierten Spannung bzw. der elektromotorischen Kraft mit der Mitte des stromlosen Intervalls zu synchronisieren. Damit werden Phasenstrom und EMK in Phase gehalten und das Verhältnis der Leistung zum Stromeffektivwert wird maximiert.

Mit anderen Worten wird bei dem sensorlosen Regelungsverfahren der DE 10 2017 117 109 A1 der Kommutierungszeitpunkt bzw. die Ermittlung der Rotorposition durch Messung einer Phasenspannung und der Sternpunktspannung ermittelt und aus der Differenz dieser beiden Spannungen wird die induzierte Spannung berechnet. Im normalen Betrieb sollte die induzierte Spannung gleich Null sein, d.h. die Kommutierung erfolgt synchron zum Nulldurchgang der induzierten Spannung. Die Phasenregelschleife (PLL) der DE 10 2017 117 109 A1 synchronisiert die PWM-Frequenz mit der Motordrehzahl anhand der Spannungsdifferenz als induzierte Spannung und regelt somit die Spannungsdifferenz zum Abtastzeitpunkt auf Null.

Somit gibt es bei der Regelung von dreiphasigen Synchronmotoren zum einen den weit verbreiteten Regelungsansatz der BLDC-Ansteuerung, bei welcher immer eine der drei Phasen unbestromt ist. In dieser Zeit werden in der stromlosen Phase die Spannung und vor allem der Nulldurchgang der Spannung gemessen.

Die BLDC-Ansteuerung hat den Nachteil, dass der Strom aufgrund der Messpausen nicht sinusförmig ist, was zu Geräuschen im Motor führen kann. Das Ausschalten des Stromes verlangt zusätzlich eine relativ hohe Stützkapazität auf der Schaltung selber. Zudem ist der Strom in der Zuleitung ungleichmäßig bzw. ungleichförmig. Auch kann der Wirkungsgrad abhängig vom Lastpunkt geringer sein als bei einer Sinuskommutierung.

Diese Sinuskommutierung in Kombination mit einer sensorlosen Vektorregelung stellt ein zweites gängiges Verfahren für Regelung von dreiphasigen Synchronmotoren dar. Sie wird auch als Raumzeigermodulation bezeichnet und stellt ein Verfahren zur Steuerung von rotierenden elektrischen Maschinen auf Basis der Pulsweitenmodulation dar, bei welchem ein Mehrphasendrehstromsystem auf elektronischem Wege so nachgebildet wird, wie es für den Betrieb von Drehstrommaschinen benötigt wird.

Die Sinuskommutierung weist nicht die Nachteile der BLDC-Ansteuerung auf, jedoch ist hier kein Drehzahlfeedback vorhanden. Zudem verlangt die Sinuskommutierung insbesondere bei hohen Drehzahlen eine enorme Rechenkapazität der Steuerungseinheit bzw. der Leistungselektronik zur Durchführung der Vektorregelung.

Der Erfindung stellt sich das Problem, ein Verfahren zum Ansteuern eines mindestens zweiphasigen bürstenlosen Motors der eingangs beschriebenen Art bereitzustellen, welches ohne Rotorlagesensor umgesetzt werden kann und die Nachteile bekannter Regelungen bzw. Ansteuerungen vermeidet oder zumindest reduziert. Insbesondere sollen die Nachteile der BLDC-Ansteuerung und bzw. oder der Sinuskommutierung in Kombination mit einer sensorlosen Vektorregelung vermieden oder zumindest reduziert werden. Dies soll vorzugsweise möglichst einfach, bauraumsparend, energiesparend und bzw. oder kostengünstig umgesetzt werden. Zumindest soll eine Alternative zu bekannten derartigen Verfahren geschaffen werden.

Erfindungsgemäß wird dieses Problem durch ein Verfahren mit den Merkmalen des Patentanspruchs 1, durch eine Ansteuerungsvorrichtung mit den Merkmalen des Patentanspruchs 11, durch einen mindestens zweiphasigen bürstenlosen Motor mit den Merkmalen des Patentanspruchs 14 sowie durch ein Haushaltsgerät mit den Merkmalen des Patentanspruchs 15 gelöst. Vorteilhafte Ausgestaltungen und Weiterbildungen der Erfindung ergeben sich aus den nachfolgenden Unteransprüchen.

Somit betrifft die Erfindung ein Verfahren zum Ansteuern eines mindestens zweiphasigen bürstenlosen Motors ohne Rotorlagesensor mit wenigstens den Schritten:

- sinusförmiges Bestromen wenigstens einer Phase, wobei die Phasenspannung des Bestromens vorzugsweise mittels PWM-Steuerung eingestellt wird,

- Ermitteln der Phasenspannung der nicht rein sinusförmig bestromten Phase,

- Ermitteln einer Sternpunktspannung,

- Bestimmen einer Spannungsdifferenz EMK der nicht rein sinusförmig bestromten Phase aus der Differenz zwischen der ermittelten Phasenspannung und der ermittelten Sternpunktspannung, und

- Bestimmen einer Rotorlage basierend auf der bestimmten Spannungsdifferenz der nicht rein sinusförmig bestromten Phase.

Mit anderen Worten können erfindungsgemäß die Betriebsarten, einen mindestens zweiphasigen bürstenlosen Motor mittels Sinuskommutierung und mittels BLDC-Ansteuerung zu betreiben, miteinander kombiniert werden. Hierzu wird wenigstens eine Phase des mindestens zweiphasigen bürstenlosen Motors sinusförmig bestromt und somit mittels Sinuskommutierung betrieben, während sie bestromt wird. Diejenige Phase, welche nicht rein sinusförmig bestromt wird, wird analog einer BLDC-Ansteuerung als Messphase verwendet und zur Ermittlung der Rotorlage verwendet, so dass auf einen Rotorlagesensor verzichtet werden kann.

Hierdurch können die Eigenschaften und Vorteile von Sinuskommutierung und BLDC-Ansteuerung gemeinsam bei einem mindestens zweiphasigen bürstenlosen Motor angewendet und genutzt werden. Insbesondere kann durch die sinusförmige Bestromung der Sinuskommutierung eine sehr wirkungsvolle Bestromung erfolgen, was insbesondere eine möglichst gute Ausnutzung bzw. einen möglichst langen Betrieb des Motors bzw. eines entsprechenden Geräts mit begrenztem elektrischen Energiespeicher ermöglichen kann. Auch können die Geräusche, welche bei nicht-sinusförmiger Bestromung auftreten können, vermieden bzw. reduziert werden.

Gemäß einem Aspekt der Erfindung erfolgt das Ermitteln der Phasenspannung innerhalb eines Zeitfensters der nicht rein sinusförmig bestromten Phase, welches kürzer als die nicht rein sinusförmig bestromte Phase ist, wobei außerhalb des Zeitfensters ein sinusförmiges Bestromen der nicht rein sinusförmig bestromten Phase erfolgt. Somit ist gemäß diesem Aspekt der Erfindung unter der nicht rein sinusförmig bestromten Phase eine Phase mit zeitweiser Unterbrechung der ansonsten sinusförmigen Bestromung zu verstehen. Mit anderen Worten wird eine sinusförmig bestromte Phase durchgehend sinusförmig bestromt während bei einer nicht rein sinusförmig bestromten Phase zwar ebenfalls grundsätzlich eine sinusförmige Bestromung erfolgt, diese jedoch für die Dauer des Zeitfensters unterbrochen wird.

Auf diese Art und Weise kann die sinusförmige Bestromung länger als bei einer vollständig nicht bestromten Phase erfolgen, was die Bestromung aller Phasen näher einem vollständigen Sinus annähern kann. Gleichzeitig kann die sinusförmige Bestromung der nicht rein sinusförmig bestromten Phase für das Zeitfenster unterbrochen werden, um die Phasenspannung zu ermitteln und hierauf basierend die Rotorlage zu bestimmten.

Gemäß einem weiteren Aspekt der Erfindung umfasst das Zeitfenster einen Nulldurchgang der Spannungsdifferenz. Auf diese Art und Weise kann sichergestellt werden, dass der Nulldurchgang zur Ermittlung der Phasenspannung erfasst werden kann.

Gemäß einem weiteren Aspekt der Erfindung liegt das Zeitfenster in der Mitte der nicht rein sinusförmig bestromten Phase bzw. der entsprechenden Dauer. Auf diese Art und Weise kann einfach und verlässlich sichergestellt werden, dass das Zeitfenster einen Nulldurchgang der Spannungsdifferenz umfasst und somit der Nulldurchgang wie zuvor beschrieben erfasst werden kann.

Gemäß einem weiteren Aspekt der Erfindung ist das Zeitfenster höchstens halb so lang, vorzugsweise höchstens ein Viertel so lang, wie die nicht rein sinusförmig bestromte Phase. Hierdurch kann die sinusförmige Bestromung möglichst lange erfolgen, um insgesamt eine möglichst sinusförmige Bestromung trotz Messung des Nulldurchgangs zu erreichen.

Gemäß einem weiteren Aspekt der Erfindung erfolgen diese Schritte innerhalb einer elektrischen Periode wenigstens für eine der Phasen nicht.

Diesem Aspekt der Erfindung liegt dabei die Erkenntnis zugrunde, dass bisher eine derartige Bestimmung der Rotorlage basierend auf der bestimmten induzierten Spannung bzw. auf den Nulldurchgängen der induzierten Spannung für jeden Sektor einer elektrischen Periode, d.h. einer mechanischen Motorumdrehung, erfolgt. Bei einem beispielsweise dreiphasigen bürstenlosen Motor wird dies somit für drei Phasen jeweils zwei Mal und damit insgesamt sechs Mal pro elektrischer Periode durchgeführt. Hierfür ist eine entsprechende Abtasteinrichtung in Form einer entsprechenden elektronischen Schaltung für jede der drei Phasen erforderlich.

Da sich die Rotorlage bzw. die Geschwindigkeit des Rotors aufgrund der Massenträgheit des Rotors jedoch innerhalb einer elektrischen Periode nur geringfügig und nicht sprunghaft ändern kann, wird erfindungsgemäß darauf verzichtet, alle Phasen zur Bestimmung der Rotorlage zu verwenden. Dies kann seitens der Steuerungseinheit den rechnerischen Aufwand reduzieren. Insbesondere kann aber die Abtasteinrichtung hinsichtlich ihrer Elektronik entsprechend einfacher, kostengünstiger, bauraumsparender und bzw. oder energiesparender ausgebildet werden, indem ein Ermitteln der Phasenspannung und der Sternpunktspannung wenigstens einer Phase elektronisch gar nicht vorgesehen werden.

Eine verlässliche Bestimmung der Rotorlage kann wie bisher bekannt wenigstens aufgrund der einen ermittelten Phasenspannung und der einen ermittelten Sternpunktspannung erfolgen, indem diese Größen seitens der Abtasteinrichtung für wenigstens eine Phase wie bisher bekannt ermittelt werden.

Gemäß einem weiteren Aspekt der Erfindung erfolgen diese Schritte innerhalb einer elektrischen Periode lediglich für eine erste Phase. Hierdurch kann der entsprechende Aufwand, insbesondere der Abtasteinrichtung, minimiert und dennoch die Rotorlage wie bisher bekannt bestimmt werden.

Gemäß einem weiteren Aspekt der Erfindung erfolgen diese Schritte innerhalb einer elektrischen Periode zwei Mal für die erste Phase. Hierdurch können die Möglichkeiten zur Bestimmung der Rotorlage für die erste Phase als einzige Phase ausgeschöpft werden, da innerhalb einer elektrischen Periode pro Phase stets zwei Mal die Möglichkeit besteht, die induzierte Spannung bzw. deren Nulldurchgang im unbestromten Zustand zu ermitteln. Hierdurch kann eine Bestimmung der Rotorlage wie bisher bekannt alle halbe elektrische Periode erfolgen, was bei reduziertem Aufwand dennoch zu einer vergleichsweise häufigen Bestimmung der Rotorlage führen kann.

Gemäß einem weiteren Aspekt der Erfindung erfolgen diese Schritte innerhalb einer elektrischen Periode lediglich einmal für die erste Phase. Dies kann den entsprechenden Aufwand seitens der Steuerungseinheit weiter reduzieren und die Bestimmung der Rotorlage wie bisher bekannt ein Mal pro elektrische Periode ermöglichen.

Gemäß einem weiteren Aspekt der Erfindung wird die Rotorlage für wenigstens eine weitere Phase, vorzugsweise für alle weiteren Phasen, für welche diese Schritte nicht erfolgt sind, aus der Rotorlage wenigstens einer Phase bestimmt, für welche diese Schritte erfolgt sind.

Wird die Rotorlage bzw. die Geschwindigkeit des Rotors dabei aufgrund der Massenträgheit des Rotors innerhalb einer elektrischen Periode als nahezu unveränderlich angesehen, so kann aus wenigstens einer bestimmten Rotorlage pro elektrische Periode die Rotorlage für wenigstens einen weiteren Sektor bzw. für wenigstens eine weitere Phase der elektrischen Periode bestimmt und insbesondere linear interpoliert werden. Hierdurch können zum Beispiel einer Regelung des bürstenlosen Motors die Rotorlage pro Sektor bzw. pro Phase zur Verfügung gestellt werden, ohne diese jeweils wie bisher bekannt aus der Phasenspannung und aus der Sternpunktspannung der jeweiligen nicht bestromten Phase ermitteln zu müssen.

Die vorliegende Erfindung betrifft auch eine Ansteuerungsvorrichtung zum Ansteuern eines mindestens zweiphasigen bürstenlosen Motors ohne Rotorlagesensor, vorzugsweise gemäß eines Verfahrens wie zuvor beschrieben, mit einer Steuerungseinheit, welche ausgebildet ist, wenigstens eine Phase des mindestens zweiphasigen bürstenlosen Motors sinusförmig zu bestromen, wobei die Phasenspannung des Bestromens vorzugsweise mittels PWM-Steuerung eingestellt wird, und mit einer Abtasteinrichtung, welche ausgebildet ist, die Phasenspannung der nicht bestromten Phase und eine Sternpunktspannung zu ermitteln, wobei die Steuerungseinheit ferner ausgebildet ist, eine induzierte Spannung bzw. Spannungsdifferenz der nicht bestromten Phase aus der Differenz zwischen der ermittelten Phasenspannung und der ermittelten Sternpunktspannung zu bestimmten und eine Rotorlage basierend auf der bestimmten induzierten Spannung der nicht-bestromten Phase zu bestimmen, wobei die Abtasteinrichtung ausgebildet ist, die Phasenspannung der nicht bestromten Phase und eine Sternpunktspannung wenigstens für eine der Phasen nicht zu ermitteln. Hierdurch kann eine Ansteuerungsvorrichtung bereitgestellt werden, um die zuvor beschriebenen Aspekte der Erfindung bzw. um das erfindungsgemäße zuvor beschriebene Verfahren bei einem mindestens zweiphasigen bürstenlosen Motor umzusetzen.

Gemäß einem Aspekt der Erfindung ist die Abtasteinrichtung ausgebildet, die Phasenspannung der nicht bestromten Phase und eine Sternpunktspannung lediglich für eine erste Phase zu ermitteln. Dies kann den entsprechenden Aufwand weiter reduzieren bzw. seitens der Abtasteinrichtung minimieren, wie zuvor beschrieben.

Gemäß einem weiteren Aspekt der Erfindung ist die Abtasteinrichtung ausgebildet, die Phasenspannung innerhalb eines Zeitfensters der nicht rein sinusförmig bestromten Phase, welches kürzer als die nicht rein sinusförmig bestromte Phase ist, zu ermitteln, wobei vorzugsweise das Zeitfenster einen Nulldurchgang der Spannungsdifferenz umfasst und bzw. oder wobei vorzugsweise das Zeitfenster in der Mitte der nicht rein sinusförmig bestromten Phase liegt und bzw. oder wobei das Zeitfenster höchstens halb so lang, vorzugsweise höchstens ein Viertel so lang, wie die nicht rein sinusförmig bestromte Phase ist. Hierdurch können die entsprechenden Aspekte des zuvor beschriebenen erfindungsgemäßen Verfahrens mittels der erfindungsgemäßen Ansteuerungsvorrichtung umgesetzt werden.

Die vorliegende Erfindung betrifft auch einen mindestens zweiphasigen bürstenlosen Motor, vorzugsweise ohne Rotorlagesensor, mit einer Ansteuerungsvorrichtung wie zuvor beschrieben. Hierdurch kann ein mindestens zweiphasiger bürstenloser Motor bereitgestellt werden, um die zuvor beschriebenen Aspekte der Erfindung bzw. um das erfindungsgemäße zuvor beschriebene Verfahren umzusetzen.

Die vorliegende Erfindung betrifft auch ein Haushaltsgerät mit mindestens einem mindestens zweiphasigen bürstenlosen Motor wie zuvor beschrieben. Hierdurch kann ein Haushaltsgerät bereitgestellt werden, um die zuvor beschriebenen Aspekte der Erfindung bzw. um das erfindungsgemäße zuvor beschriebene Verfahren umzusetzen.

Gemäß einem Aspekt der Erfindung weist das Haushaltsgerät einen, vorzugsweise wiederaufladbaren, elektrischen Energiespeicher auf und ist ausgebildet, mittels der gespeicherten elektrischen Energie des elektrischen Energiespeichers betrieben zu werden.

Da die zuvor beschriebenen Aspekte der Erfindung auch zu einem geringeren Energieverbrauch führen können, kann die Umsetzung der Erfindung bei einem akkubetriebenen Haushaltsgerät zu einer entsprechend längeren Nutzungsdauer für den Benutzer führen.

Ein Ausführungsbeispiel der Erfindung ist in den Zeichnungen rein schematisch dargestellt und wird nachfolgend näher beschrieben. Es zeigt

Figur 1    eine Schaltung eines bekannten bürstenlosen Motors;

Figur 2    Verläufe der Phasenspannungen der drei Phasen des bürstenlosen Motors der Figur 1;

Figur 3    eine Schaltung eines erfindungsgemäßen bürstenlosen Motors;

Figur 4    ein Verlauf der Phasenspannungen einer einzigen erfassten Phase des bürstenlosen Motors der Figur 3; und

Figur 5    ein Ablaufdiagramm eines erfindungsgemäßen Verfahrens.

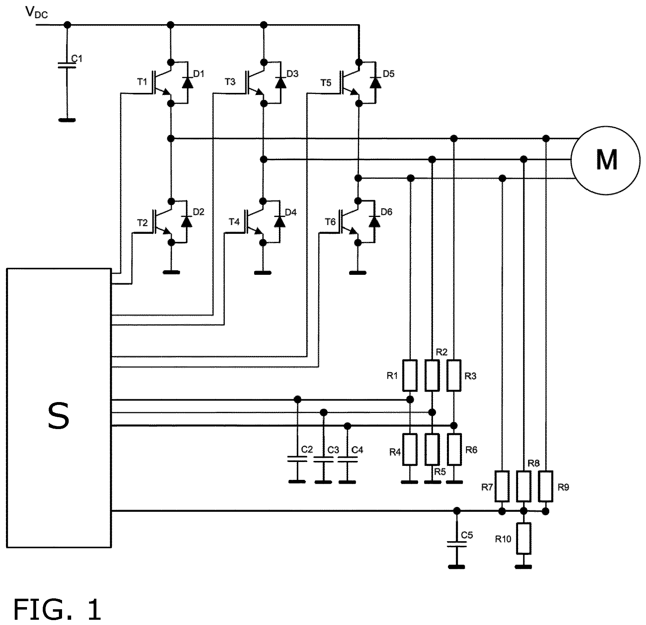

Figur 1 zeigt eine Schaltung eines bekannten bürstenlosen Motors M. Der bürstenlose Motor M, kurz BLDC-Motor M, wird über eine Steuerungseinheit S in Form eines geregelten Frequenzumrichters S angesteuert bzw. betrieben. Aus einer Gleichspannung $V_{DC}$ als Zwischenkreisspannung $V_{DC}$ wird über eine B6-Brücke mit sechs Schaltelementen (MOSFETs oder Transistoren) T1-T6 und sechs Dioden D1-D6 ein dreiphasiges Drehfeld an den BLDC-Motor M gelegt. Hierdurch wird eine Rotation eines Rotors (nicht dargestellt) des BLDC-Motors M im Betrieb bewirkt.

Damit das Drehfeld, welches auf den Stator (nicht dargestellt) des BLDC-Motors M gegeben wird, passend zur Rotorlage ist, muss die Rotorlage bestimmt werden. In der Vergangenheit wurde dies über einen Sensor am BLDC-Motor M getan. Mit dem Aufkommen der sensorlosen Regelung wurde der Sensor durch die Messung elektrischer Größen in Kombination mit einem Software-Motormodell seitens der Steuerungseinheit S ersetzt. Zu diesem Zweck wurden die Phasenspannungen $U_{Phase}$ der drei Phasen U, V, W und auch die Sternpunktspannung gemessen. Die Sternpunktspannung kann entweder am Sternpunkt des BLDC-Motors M gemessen oder über einen "künstlichen Sternpunkt" nachgestellt und gemessen werden. Die Schaltung der ohmschen Widerstände R8-R10 und des Kondensators C5 stellt den künstlichen Sternpunkt dar. Bei einem BLDC-Motor M mit Dreieckschaltung wird üblicherweise nur mit dem künstlichen Sternpunkt gearbeitet. Diese Art der Regelung bzw. Ansteuerung des BLDC-Motors M wird als BLDC-Ansteuerung bezeichnet.

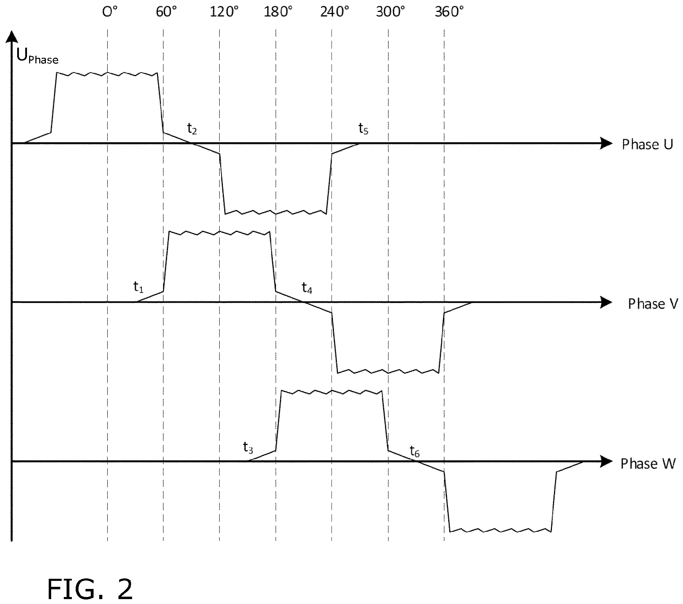

Figur 2 zeigt die Verläufe der Phasenspannungen $U_{Phase}$ der drei Phasen U, V, W des bürstenlosen Motors M der Figur 1. Der Betrieb bzw. die Speisung der drei Phasen U, V, W erfolgt jeweils mittels PWM-Steuerung derartig, dass sich jeweils im Wesentlichen rechteckige Verläufe der Phasenspannungen $U_{Phase}$ einstellen. Wie dem zeitlichen Verlauf der Phasenspannung $U_{Phase}$ der Phase U zu entnehmen ist, so wird die Phase U 120° (zwei Sektoren) lang mit einer positiven Spannung aktiv beaufschlagt. Einen Sektor lang ist die Phase U stromlos. In dieser Zeit kann die EMK der Phase U gemessen werden.

Die Nulllinie bei der Phasenspannung $U_{Phase}$ ist die Sternpunktspannung. Dort, wo die

Phasenspannung $U_{Phase}$ die Sternpunktspannung kreuzt, liegt ein sogenannter Nulldurchgang $t_1$-$t_6$ der jeweiligen Phasenspannung $U_{Phase}$ vor. Dieser Zeitpunkt des Nulldurchgangs $t_1$-$t_6$ der Phasenspannung $U_{Phase}$ ist der Moment, wo der Stator und der Rotor zueinander ausgerichtet sind. Auf diese Nulldurchgänge $t_1$-$t_6$ wird gemessen. Somit kann in der Phase U bei einem einpoligen BLDC-Motor M zwei Mal ein Nulldurchgang während einer mechanischen Umdrehung (0° bis 360°) gemessen werden. Misst man in allen drei Phasen U, V, W den Strom, so kann während einer mechanischen Umdrehung sechs Mal die Rotorlage bestimmt werden. Auf diesem Prinzip bauen alle Steuerungseinheiten S von herkömmlichen BLDC-Motoren M auf, welche mittels BLDC-Ansteuerung betrieben werden.

Zur sensorlosen Bestimmung der Rotorlage eines derartigen bekannten BLDC-Motors M kann die EMK der jeweils unbestromten Phase U, V, W von der Steuerungseinheit S gemessen und ausgewertet werden. Dabei wird zur Bestimmung der EMK die Phasenspannung $U_{Phase}$ der zu dem Messzeitpunkt unbestromten Phase U, V, W gemessen und mit der gleichzeitig gemessenen Sternpunktspannung verglichen, welche mittels eines nachgebildeten Sternpunkts der Steuerungseinheit S ermittelt wird. Das Messfenster der EMK beträgt bei einem dreiphasigen BLDC-Motor M 60° von einer elektrischen Periode. Die EMK kann somit zwei Mal pro elektrischer Periode, d.h. pro Motorumdrehung, pro Phase ermittelt bzw. gemessen werden. Dabei soll genau der Nulldurchgang $t_1$-$t_6$ der EMK erfasst werden. Bei einem dreiphasigen BLDC-Motor M erfolgt dies für jede der drei Phasen U, V, W und somit sechs Mal pro elektrischer Periode, siehe Figur 2.

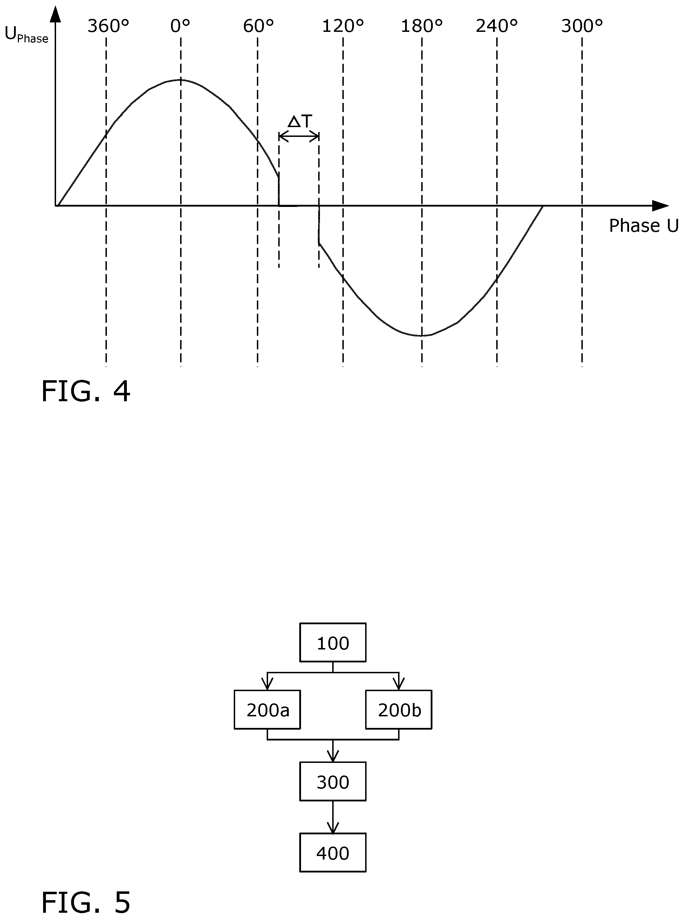

Um nun die Nachteile der BLDC-Ansteuerung zu reduzieren, wird der dreiphasige BLDC-Motor M grundsätzlich sinusförmig bestromt. Lediglich während der Messung des Nulldurchgangs der EMK für die Phase U erfolgt ein Betrieb mit BLDC-Ansteuerung, siehe Figur 4. Somit wird diejenige Phase, welche nicht rein sinusförmig bestromt wird, als Messphase analog einer BLDC-Ansteuerung betrieben und zur Ermittlung der Rotorlage verwendet, so dass auf einen Rotorlagesensor verzichtet werden kann, wie weiter unten noch näher erläutert wird.

Hierdurch können erfindungsgemäß die Betriebsarten, den dreiphasigen BLDC-Motor M mittels Sinuskommutierung und mittels BLDC-Ansteuerung zu betreiben, miteinander kombiniert werden. Hierzu werden alle drei Phasen U, V, W des dreiphasigen BLDC-Motors M sinusförmig bestromt und somit mittels Sinuskommutierung betrieben, während sie bestromt werden.

Hierdurch können die Eigenschaften und Vorteile von Sinuskommutierung und BLDC-Ansteuerung gemeinsam bei dem dreiphasigen BLDC-Motor M angewendet und genutzt werden. Insbesondere kann durch die sinusförmige Bestromung der Sinuskommutierung eine sehr wirkungsvolle Bestromung erfolgen, was insbesondere eine möglichst gute Ausnutzung bzw. einen möglichst langen Betrieb des dreiphasigen BLDC-Motors M bzw. eines entsprechenden Geräts mit begrenztem elektrischen Energiespeicher ermöglichen kann. Auch können die Geräusche, welche bei nicht-sinusförmiger Bestromung auftreten können, vermieden bzw. reduziert werden.

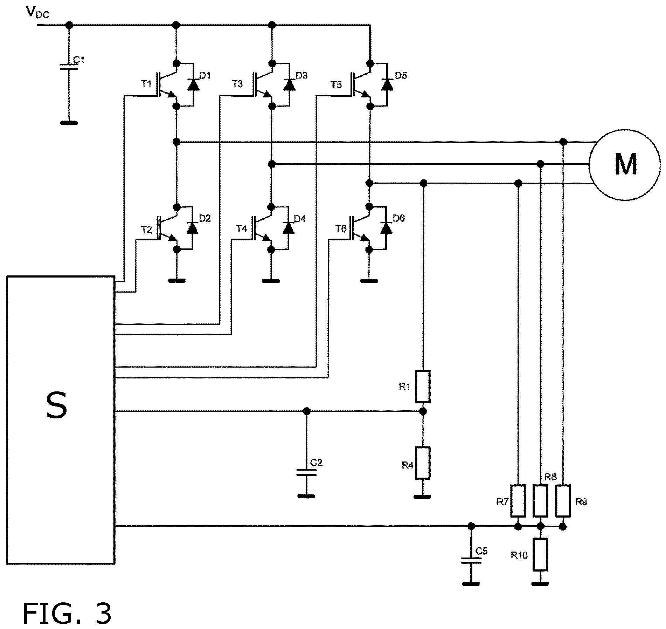

Um ferner den entsprechenden Aufwand der Steuerungseinheit S hinsichtlich der elektronischen Bauteile, welche eine Abtasteinrichtung darstellen, zu reduzieren und hierdurch Kosten, Bauraum sowie elektrischen Energieverbrauch zu sparen, wird erfindungsgemäß die Ermittlung der Phasenspannung $U_{Phase}$ auf lediglich eine Phase U der drei Phasen U, V, W reduziert, siehe Figur 3. Den entsprechenden Verlauf der Phasenspannung $U_{Phase}$ für die Phase U ist erneut in der Figur 4 dargestellt. Aus diesem Verlauf können rein messtechnisch maximal zwei Nulldurchgänge $t_2$, $t_5$ der Phasenspannung $U_{Phase}$ der Phase U pro elektrischer Periode bzw. pro mechanischer Umdrehung ermittelt werden, vgl. Figur 2, wobei auch lediglich einer der beiden Nulldurchgänge $t_2$, $t_5$ der Phasenspannung $U_{Phase}$ der ersten Phase U pro elektrischer Periode bzw. pro mechanischer Umdrehung verwendet werden kann.

Um dabei die sinusförmige Bestromung möglichst lange zu nutzen bzw. um die Unterbrechung der reinen Sinuskommutierung zugunsten der EMK-Messung möglichst gering zu halten, wird nicht eine vollständige elektrische Periode der ersten Phase U analog einer BLDC-Ansteuerung betrieben bzw. als Messphase verwendet, sondern lediglich ein Zeitfenster $\Delta T$ innerhalb der elektrischen Periode der ersten Phase U, innerhalb welcher ein Ermitteln genau eines Nulldurchgangs der Phasenspannung $U_{Phase}$ der ersten Phase U erfolgt. Das Zeitfenster $\Delta T$ schließt dabei den Nulldurchgang ein, liegt etwa mittig innerhalb der elektrischen Periode der ersten Phase U und erstreckt sich etwas über 15° bis 20° der elektrischen Periode der ersten Phase U, siehe Figur 4.

Auf diese Art und Weise kann erfindungsgemäß ein Verfahren umgesetzt werden, indem ein (rein) sinusförmiges Bestromen 100 von zwei Phasen U, V, W erfolgt, wobei die Phasenspannung $U_{Phase}$ des Bestromens 100 mittels PWM-Steuerung eingestellt wird. Es erfolgt ein Ermitteln 200a der Phasenspannung $U_{Phase}$ der nicht rein sinusförmig bestromten Phase U, V, W, ein Ermitteln 200b einer Sternpunktspannung, ein Bestimmen 300 einer EMK der nicht rein sinusförmig bestromten Phase U, V, W aus der Differenz zwischen der ermittelten Phasenspannung $U_{Phase}$ und der ermittelten Sternpunktspannung und ein Bestimmen 400 einer Rotorlage basierend auf der bestimmten EMK der nicht rein sinusförmig bestromten Phase U, V, W. Dabei erfolgen diese Schritte innerhalb einer elektrischen Periode wenigstens für eine der Phasen U, V, W nicht. Insbesondere erfolgen diese Schritte innerhalb einer elektrischen Periode für lediglich die erste Phase U. In jedem Fall wird auch die nicht rein sinusförmig bestromte Phase U, V, W grundsätzlich sinusförmig bestromt, d.h. mittels Sinuskommutierung betrieben, bis auf das Zeitfenster $\Delta T$, in welchem analog einer BLDC-Ansteuerung das Ermitteln 200a der Phasenspannung $U_{Phase}$ der nicht rein sinusförmig bestromten Phase U, V, W erfolgt.

Um den Verlust der Messinformation zu kompensieren, welcher vorliegt, da für die übrigen beiden Phasen V, W keine Nulldurchgänge $t_1$, $t_3$, $t_4$, $t_6$ ermittelt werden, kann ein entsprechendes Software-Modell des BLDC-Motors M verwendet werden. Hierzu wird der Kommutierungszeitpunkt aus dem zuletzt gemessenen Nulldurchgang $t_2$, $t_5$ der Phasenspannung $U_{Phase}$ der Phase U durch Extrapolation des Winkels ermittelt.

Bei den herkömmlichen Ansteuerverfahren liegen sechs Messpunkte $t_1$-$t_6$ in sechs Sektoren, d.h. ein Messpunkt pro Sektor, der elektrischen Periode vor. Somit erfolgt bisher eine Ansteuerung derart: Nulldurchgang messen, Sektor umschalten, nächsten Nulldurchgang messen, Sektor umschalten usw. Eine derartige Ansteuerung wurde bisher als einfache State-Machine mit sechs Zuständen umgesetzt, die passend zur Messung umgeschaltet wurden.

Bei der erfindungsgemäßen Messung mit lediglich einer Phase pro elektrischer Periode bleiben die sechs Sektoren prinzipiell erhalten. Da es aber nur einen Messpunkt bzw. zwei Messpunkte pro elektrischer Periode gibt, wird die Sektorumschaltung zeitlich interpoliert. Aufgrund der Massenträgheit des Rotors kann der BLDC-Motor M seine Geschwindigkeit nur bedingt und nicht sprunghaft ändern. Dieses physikalische Gesetz kann sich bei der Interpolierung der Sektoren in der Ansteuerung zu Nutze gemacht werden. Durch die Annahme einer quasikonstanten Drehzahl zwischen zwei aufeinanderfolgenden Abtastzeitpunkten $t_2$, $t_5$ der EMK der Phase U können die fehlenden Kommutierungszeitpunkte $t_1$, $t_3$, $t_4$, $t_6$ durch Integration des Winkels extrapoliert werden.

Dies kann beispielsweise dadurch erfolgen, dass in der ersten Phase U sogar lediglich ein Nulldurchgang $t_1$ ermittelt wird, vgl. Figur 2. Die übrigen Nulldurchgänge $t_2$-$t_6$ können dann errechnet werden, indem eine Veränderung der Geschwindigkeit innerhalb einer mechanischen Umdrehung vernachlässigt und linear zwischen den Nulldurchgängen $t_1$-$t_6$ der induzierten Spannung EMK interpoliert wird. Dies kann wie folgt erfolgen:

$$t_n = \frac{\tau}{6} * (n - 1),$$

wobei $\tau$ die Dauer einer elektrischen Periode bzw. einer mechanischen Umdrehung, t die Zeit und n die übrigen Sektoren 2 bis 6 darstellt. Dies kann entsprechend basierend auf zwei Nulldurchgängen $t_2$, $t_5$ der EMK der Phase U erfolgen.

## Bezugszeichenliste (Bestandteil der Beschreibung)

| | |
|---|---|
| C1-C5 | Kondensatoren |
| D1-D6 | Dioden der B6-Brücke |
| T1-T6 | Transistoren der B6-Brücke |
| R1-R10 | ohmsche Widerstände |
| $V_{DC}$ | Gleichspannung |
| | |
| U | Phase U |
| V | Phase V |
| W | Phase W |
| | |
| $t_1$-$t_6$ | Nulldurchgänge der Sektoren; Messzeitpunkte |
| $U_{Phase}$ | Phasenspannung; Zwischenkreisspannung |
| EMK | induzierte Spannung; elektromotorische Kraft |
| | |
| $\tau$ | Dauer einer elektrischen Periode |
| t | Zeit |
| n | Sektoren |
| $\Delta T$ | Zeitfenster |
| | |
| M | (dreiphasiger) bürstenloser Motor; BLDC-Motor |
| S | Steuerungseinheit; Rechner; geregelter Frequenzumrichter |

| | |
|---|---|
| 100 | sinusförmiges Bestromen wenigstens einer Phase U, V, W |
| 200a | Ermitteln der Phasenspannung $U_{Phase}$ der nicht-bestromten Phase U, V, W |
| 200b | Ermitteln einer Sternpunktspannung |
| 300 | Bestimmen einer Spannungsdifferenz (EMK) der nicht-bestromten Phase U, V, W |
| 400 | Bestimmen einer Rotorlage basierend auf der bestimmten Spannungsdifferenz EMK der nicht-bestromten Phase U, V, W |

## Patentansprüche

1. Verfahren zum Ansteuern eines mindestens zweiphasigen bürstenlosen Motors (M) ohne Rotorlagesensor mit wenigstens den Schritten:

   • sinusförmiges Bestromen (100) wenigstens einer Phase (U, V, W), wobei die Phasenspannung ($U_{Phase}$) des Bestromens (100) vorzugsweise mittels PWM-Steuerung eingestellt wird,
   • Ermitteln (200a) der Phasenspannung ($U_{Phase}$) der nicht rein sinusförmig bestromten Phase (U, V, W),
   • Ermitteln (200b) der Sternpunktspannung,
   • Bestimmen (300) einer Spannungsdifferenz (EMK) der nicht bestromten Phase (U, V, W) aus der Differenz zwischen der ermittelten Phasenspannung ($U_{Phase}$) und der ermittelten Sternpunktspannung, und
   • Bestimmen (400) einer Rotorlage basierend auf der bestimmten Spannungsdifferenz der nicht bestromten Phase (U, V, W).

2. Verfahren nach Anspruch 1, **dadurch gekennzeichnet, dass**

   das Ermitteln (200a) der Phasenspannung ($U_{Phase}$) innerhalb eines Zeitfensters ($\Delta T$) der nicht rein sinusförmig bestromten Phase (U, V, W) erfolgt, welches kürzer als die nicht rein sinusförmig bestromte Phase (U, V, W) ist, wobei außerhalb des Zeitfensters ($\Delta T$) ein sinusförmiges Bestromen (100) der nicht rein sinusförmig bestromten Phase (U, V, W) erfolgt.

3. Verfahren nach Anspruch 2, **dadurch gekennzeichnet, dass**
   das Zeitfenster ($\Delta T$) einen Nulldurchgang der Spannungsdifferenz (EMK) umfasst.

4. Verfahren nach Anspruch 2 oder 3, **dadurch gekennzeichnet, dass**
   das Zeitfenster ($\Delta T$) in der Mitte der nicht rein sinusförmig bestromten Phase (U, V, W) liegt.

5. Verfahren nach einem der Ansprüche 2 bis 4, **da-**

**durch gekennzeichnet, dass**
das Zeitfenster (ΔT) höchstens halb so lang, vorzugsweise höchstens ein Viertel so lang, wie die nicht rein sinusförmig bestromte Phase (U, V, W) ist.

6. Verfahren nach einem der vorangehenden Ansprüche, **dadurch gekennzeichnet, dass**
diese Schritte innerhalb einer elektrischen Periode wenigstens für eine der Phasen (U, V, W) nicht erfolgen.

7. Verfahren nach Anspruch 6, **dadurch gekennzeichnet, dass**
diese Schritte innerhalb einer elektrischen Periode lediglich für eine erste Phase (U, V, W) erfolgen.

8. Verfahren nach Anspruch 7, **dadurch gekennzeichnet, dass**
diese Schritte innerhalb einer elektrischen Periode zwei Mal für die erste Phase (U, V, W) erfolgen.

9. Verfahren nach Anspruch 7, **dadurch gekennzeichnet, dass**
diese Schritte innerhalb einer elektrischen Periode lediglich einmal für die erste Phase (U, V, W) erfolgen.

10. Verfahren nach einem der vorangehenden Ansprüche, **dadurch gekennzeichnet, dass**
die Rotorlage für wenigstens eine weitere Phase (U, V, W), vorzugsweise für alle weiteren Phasen (U, V, W), für welche diese Schritte nicht erfolgt sind, aus der Rotorlage wenigstens einer Phase (U, V, W) bestimmt wird, für welche diese Schritte erfolgt sind.

11. Ansteuerungsvorrichtung zum Ansteuern eines mindestens zweiphasigen bürstenlosen Motors (M) ohne Rotorlagesensor, vorzugsweise gemäß einem Verfahren nach einem der vorangehenden Ansprüche,

mit einer Steuerungseinheit (S), welche ausgebildet ist, wenigstens eine Phase (U, V, W) des mindestens zweiphasigen bürstenlosen Motors (M) sinusförmig zu bestromen, wobei die Phasenspannung ($U_{Phase}$) des Bestromens (100) vorzugsweise mittels PWM-Steuerung eingestellt wird, und
mit einer Abtasteinrichtung, welche ausgebildet ist, die Phasenspannung ($U_{Phase}$) der nicht rein sinusförmig bestromten Phase (U, V, W) und eine Sternpunktspannung zu ermitteln,
wobei die Steuerungseinheit (S) ferner ausgebildet ist, eine Spannungsdifferenz (EMK) der nicht rein sinusförmig bestromten Phase (U, V, W) aus der Differenz zwischen der ermittelten Phasenspannung ($U_{Phase}$) und der ermittelten Sternpunktspannung zu bestimmten und eine Rotorlage basierend auf der bestimmten Spannungsdifferenz (EMK) der nicht rein sinusförmig bestromten Phase (U, V, W) zu bestimmen, wobei die Abtasteinrichtung ausgebildet ist, die Phasenspannung ($U_{Phase}$) der nicht rein sinusförmig bestromten Phase (U, V, W) und eine Sternpunktspannung wenigstens für eine der Phasen (U, V, W) nicht zu ermitteln.

12. Ansteuerungsvorrichtung nach Anspruch 11, **dadurch gekennzeichnet, dass**
die Abtasteinrichtung ausgebildet ist, die Phasenspannung ($U_{Phase}$) der nicht rein sinusförmig bestromten Phase (U, V, W) und eine Sternpunktspannung lediglich für eine erste Phase (U, V, W) zu ermitteln.

13. Ansteuerungsvorrichtung nach Anspruch 11 oder 12, **dadurch gekennzeichnet, dass**

die Abtasteinrichtung ausgebildet ist, die Phasenspannung ($U_{Phase}$) innerhalb eines Zeitfensters (ΔT) der nicht rein sinusförmig bestromten Phase (U, V, W), welches kürzer als die nicht rein sinusförmig bestromte Phase (U, V, W) ist, zu ermitteln,
wobei vorzugsweise das Zeitfenster (ΔT) einen Nulldurchgang der Spannungsdifferenz (EMK) umfasst, und/oder
wobei vorzugsweise das Zeitfenster (ΔT) in der Mitte der nicht rein sinusförmig bestromten Phase (U, V, W) liegt, und/oder
wobei das Zeitfenster (ΔT) höchstens halb so lang, vorzugsweise höchstens ein Viertel so lang, wie die nicht rein sinusförmig bestromte Phase (U, V, W) ist.

14. Mindestens zweiphasiger bürstenloser Motor (M), vorzugsweise ohne Rotorlagesensor, mit einer Ansteuerungsvorrichtung nach einem der Ansprüche 11 bis 13.

15. Haushaltsgerät mit mindestens einem mindestens zweiphasigen bürstenlosen Motor (M) nach Anspruch 14.

16. Haushaltsgerät nach Anspruch 15, **dadurch gekennzeichnet, dass**
das Haushaltsgerät einen, vorzugsweise wiederaufladbaren, elektrischen Energiespeicher aufweist und ausgebildet ist, mittels der gespeicherten elektrischen Energie des elektrischen Energiespeichers betrieben zu werden.

FIG. 1

FIG. 2

FIG. 3

$U_{Phase}$

360°  0°  60°  120°  180°  240°  300°

ΔT

Phase U

# FIG. 4

100

200a    200b

300

400

# FIG. 5

Europäisches
Patentamt

European
Patent Office

Office européen
des brevets

# EUROPÄISCHER RECHERCHENBERICHT

**Nummer der Anmeldung**

EP 22 20 1590

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y<br><br>A | DE 10 2014 107949 A1 (HELLA KGAA HUECK & CO [DE]) 17. Dezember 2015 (2015-12-17)<br>* Absätze [0001], [0004], [0005] *<br>* Absätze [0012], [0048] *<br>* Absätze [0054], [0055] *<br>* Absatz [0076] *<br>* Abbildungen 1, 2, 3 *<br>----- | 1-5<br><br>6-16 | INV.<br>H02P6/182 |
| Y<br><br>A | DE 10 2004 062821 A1 (BOSCH GMBH ROBERT [DE]) 6. Juli 2006 (2006-07-06)<br>* Absatz [0001] *<br>* Absätze [0011], [0012], [0017] - [0019] *<br>* Absätze [0003], [0019], [0021] *<br>* Abbildungen 1, 3 *<br>----- | 1,3<br><br>6-16 | |
| Y | DE 10 2012 006010 A1 (VOLKSWAGEN AG [DE]) 26. September 2013 (2013-09-26)<br>* Absätze [0001], [0024], [0028], [0029], [0033], [0034] *<br>* Abbildung 1 *<br>----- | 1,11 | |
| Y | DE 10 2016 123707 A1 (AIRBUS DEFENCE & SPACE GMBH [DE]; AIRBUS OPERATIONS GMBH [DE]) 7. Juni 2018 (2018-06-07)<br>* Absatz [0060] *<br>* Absätze [0062], [0093] *<br>* Absätze [0113], [0116], [0118] *<br>* Abbildungen 1, 3, 4, 7 *<br>----- | 1,11 | **RECHERCHIERTE SACHGEBIETE (IPC)**<br>H02P |
| Y | DE 10 2017 117109 A1 (MIELE & CIE [DE]) 31. Januar 2019 (2019-01-31)<br>* Absätze [0001] - [0005] *<br>* Absätze [0029], [0031] *<br>* Abbildung 1 *<br>-----<br><br>-/-- | 1,11 | |

Der vorliegende Recherchenbericht wurde für alle Patentansprüche erstellt

| Recherchenort | Abschlußdatum der Recherche | Prüfer |
|---|---|---|
| München | 16. März 2023 | Roider, Anton |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

**EP 22 20 1590**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 1 734 648 A1 (SIEMENS AG [DE]) 20. Dezember 2006 (2006-12-20) * Absätze [0026], [0027], [0029], [0030] * * Abbildung 2 * ----- | 2,4,5 | |
| A | DE 10 2008 054487 A1 (DENSO CORPORARTION [JP]) 16. Juli 2009 (2009-07-16) * Absätze [0003], [0051], [0079] * * Abbildung 1 * ----- | 15,16 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 16. März 2023 | Roider, Anton |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
 Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 20 1590

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-03-2023

| Im Recherchenbericht angeführtes Patentdokument | Datum der Veröffentlichung | Mitglied(er) der Patentfamilie | Datum der Veröffentlichung |
|---|---|---|---|
| DE 102014107949 A1 | 17-12-2015 | KEINE | |
| DE 102004062821 A1 | 06-07-2006 | BR PI0519347 A2 | 20-01-2009 |
| | | DE 102004062821 A1 | 06-07-2006 |
| | | EP 1834401 A1 | 19-09-2007 |
| | | JP 4653814 B2 | 16-03-2011 |
| | | JP 2008526180 A | 17-07-2008 |
| | | WO 2006069844 A1 | 06-07-2006 |
| DE 102012006010 A1 | 26-09-2013 | KEINE | |
| DE 102016123707 A1 | 07-06-2018 | DE 102016123707 A1 | 07-06-2018 |
| | | US 2018159449 A1 | 07-06-2018 |
| DE 102017117109 A1 | 31-01-2019 | KEINE | |
| EP 1734648 A1 | 20-12-2006 | CN 101248577 A | 20-08-2008 |
| | | EP 1734648 A1 | 20-12-2006 |
| | | US 2008197795 A1 | 21-08-2008 |
| | | WO 2006134047 A1 | 21-12-2006 |
| DE 102008054487 A1 | 16-07-2009 | CN 103151976 A | 12-06-2013 |
| | | DE 102008054487 A1 | 16-07-2009 |
| | | US 2009174350 A1 | 09-07-2009 |
| | | US 2013147406 A1 | 13-06-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017117109 A1